## Europäisches Patentamt
## European Patent Office
## Office européen des brevets

(19)

(11) Veröffentlichungsnummer: **0 170 729**
**B1**

(12) **EUROPÄISCHE PATENTSCHRIFT**

(45) Veröffentlichungstag der Patentschrift:
**04.10.89**

(21) Anmeldenummer: **84115811.6**

(22) Anmeldetag: **19.12.84**

(51) Int. Cl.⁴: **B 29 D 23/22,** B 29 C 65/14, B 29 C 69/00

(54) Verfahren zur kontinuierlichen Herstellung eines zylindrischen Hohlkörpers aus Schaumstoff.

(30) Priorität: **07.08.84 DE 3429018**

(43) Veröffentlichungstag der Anmeldung:
**12.02.86 Patentblatt 86/7**

(45) Bekanntmachung des Hinweises auf die Patenterteilung:
**04.10.89 Patentblatt 89/40**

(84) Benannte Vertragsstaaten:
**AT BE CH FR GB IT LI LU NL SE**

(56) Entgegenhaltungen:
**AT-B-363 252**
**DE-A-2 459 117**
**US-A-3 839 122**

(73) Patentinhaber: **NMC- KENMORE S.A., Rovert 10, B-4731 Raeren (BE)**

(72) Erfinder: **Butscher, Alfons, Carl Orffstrasse 37, D-6943 Birkenau (DE)**

(74) Vertreter: **UEXKÜLL & STOLBERG Patentanwälte, Beselerstrasse 4, D-2000 Hamburg 52 (DE)**

EP 0 170 729 B1

LIBER, STOCKHOLM 1989

## Beschreibung

Die Erfindung betrifft ein Verfahren gemäß dem Oberbegriff des Anspruchs 1.

Auf ein Verfahren der vorstehend angegebenen Art nimmt die DE-OS-1 915 768 Bezug. Es stößt schnell an die Grenzen seiner Anwendbarkeit, wenn Hohlkörper eines geringen Innendurchmessers erzeugt werden sollen, die außerdem eine sehr große Wandstärke aufweisen. Das Umformen des zunächst in ebener Gestalt vorliegenden Streifens zu dem Hohlkörper bedingt nämlich in diesem Falle parallel zu dem steigenden Verhältnis aus Wandstärke und Innendurchmesser eine zunehmende Materialbeanspruchung. Die zur Verfügung stehenden Werkstoffe erlauben es daher nur bedingt, unter Anwendung des vorstehend beschriebenen Verfahrens thermische Isolierkörper für Rohre eines kleinen Außendurchmessers zu erzeugen, die sich durch eine höheren Ansprüchen genügende Wärmedämmung auszeichnen.

Um derartigen Schwierigkeiten zu begegnen, ist auch schon vorgeschlagen worden, den als Isolierkörper zur Anwendung gelangenden Schaumstoffstreifen auf der dem Rohr zugewandten Seite mit einer sich in Längsrichtung erstreckenden Rippung zu versehen. Die auf diese Weise erzielte Verminderung der in der geschlossenen Isolierschale wirksamen Spannungen muß indessen erkauft werden mit einer Vielzahl von Wärmebrücken im Bereich der zwischen den ursprünglichen Rippen vorhandenen Vertiefungen. Insbesondere bei der Kälteisolierung kommt es in diesen Bereichen sehr leicht zu einer Ansammlung von Kondenswasser. Die Erzeugung der benötigten Rippung erfordert darüberhinaus einen separaten Arbeitsschritt und bedingt erhebliche Materialverluste. Beides ist in ökonomischer Hinsicht wenig befriedigend.

Aus dem, gattungsbildenden Stand der Technik, (AT-A-363 252) ist es bekannt, den Streifen aus geschlossenzelligem, thermisch erweichbarem Kunststoff nach der Formung zu einem Hohlkörper dadurch zu einem Rohr zu formen, daß die Stoßnaht verschweißt, verklebt oder durch Umhüllen mit einer Folie mit Kleberand geschlossen gehalten wird. Danach wird das so hergestellte Rohr mittel einer Heizvorrichtung einer Wärmebehandlung ausgesetzt, durch die u.a. die im Rohr verbliebenen Rückstellspannungen beseitigt werden.

Bei dieser Herstellung ergeben sich im Prinzip die gleichen Schwierigkeiten, wie vorstehend beschrieben, und insbesondere lassen sich mit diesen bekannten Verfahren keine Hohlkörper mit geringem Innendurchmesser und sehr großer Wandstärke herstellen.

Es ist Aufgabe der Erfindung, ein Verfahren zu schaffen, mit dem es unabhängig vom gewählten Innendurchmesser möglich ist, die Wandstärke des Hohlkörpers beliebig zu steigern, ohne eine überhöhte Materialbeanspruchung hervorzurufen.

Zur Lösung dieser Aufgabe dient ein Verfahren, bei dem ein ebener Streifen aus einem geschlossenzelligen, thermisch erweichbaren Schaumstoff unter gegenseitiger Verbindung seiner Längskanten zu einem Hohlkörper geformt, der Hohlkörper außenseitig mit einer Beschichtung versehen und danach einer Wärmebehandlung unterworfen wird, und das sich dadurch auszeichnet, daß der Hohlkörper wenigstens einmal mit einer dehnbaren und durch Mikrowellen erwärmbaren Beschichtung versehen sowie unter gegenseitiger Verbindung von dessen Längskanten mit einem weiteren Streifen aus geschlossenzelligem, thermisch erweichbarem Schaumstoff umhüllt wird, worauf die Wärmebehandlung durch Einwirkung von Mikrowellen durchgeführt wird, um eine Erwärmung zu bewirken, durch die die in radialer Richtung aufeinanderfolgenden Streifen wenigstens an einer Grenzfläche miteinander verschmelzen.

Die Schichtdicke der zur Anwendung gelangenden Streifen aus geschlossenzelligem, thermisch erweichbarem Schaumstoff ist vor allem abhängig von dem Durchmesser, den der jeweilige Streifen nach dem Umformen und Schließen zu dem Hohlkörper aufweist. Zunehmende Durchmesser bedingen eine Verminderung der mechanischen Beanspruchung des den geschlossenen Hohlkörper bildenden Materials. Parallel zum zunehmenden Durchmesser können daher Streifen zur Anwendung gelangen, die eine zunehmende Schichtstärke haben, und es ist demzufolge ohne weiteres möglich, bei sehr großen Durchmessern gegebenenfalls auch Streifen zu verwenden, die aus zwei oder mehreren flächenhaft zusammenkaschierten Schichten der Schaumstoffbahnen relativ verminderter Dicke bestehen.

Bei der praktischen Anwendung des vorgeschlagenen Verfahrens werden unabhängig vom speziellen Aufbau der einzelnen Teilstreifen diese jeweils zu einem geschlossenen Hohlkörper geformt und nach dem Aufbringen einer durch Mikrowellen erwärmbaren Beschichtung auf die Außenseite mit einem weiteren Streifen aus geschlossenzelligem, thermisch erweichbarem Schaumstoff umhüllt und der Einwirkung von Mikrowellen ausgesetzt, um eine Erwärmung zu bewirken. Die aus der Umformung von der ebenen in die kreisförmige Gestalt resultierenden Spannungen in den beiden an die Beschichtung angrenzenden Hohlkörpern werden dadurch offenbar so ausgeglichen, daß sich eine gegenseitige Verpressung der radial aufeinanderfolgenden Schichten ergibt. Die als außerordentlich unangenehm empfundene Spaltbildung zwischen beiden Schichten ist somit bei Anwendung des vorgeschlagenen Verfahrens nach der Erwärmung durch Mikrowellen nicht mehr vorhanden. Der Vorgang als solcher kann anschließend beim selben Werkstück beliebig oft wiederholt werden. Er erfordert lediglich jeweils das Aufbringen einer neuen Beschichtung aus einem durch Mikrowellen erwärmbaren Material auf die Außenseite des vorliegenden Hohlkörpers, das anschließende Umhüllen unter gegenseitiger Verbindung der Längskanten mit einem weiteren Streifen aus geschlossenzelligem, thermisch erweichbarem Schaumstoff und danach das Einwirkenlassen von Mikrowellen bis die erforderliche Erwärmung eingetreten ist. Wandstärken von beliebiger Dicke lassen sich auf diese Weise leicht erzeugen. Eine kontinuierliche Verfahrensdurchführung ist in jedem Falle möglich.

Als besonders geeignet für die praktische Durchführung des vorgeschlagenen Verfahrens hat sich die Verwendung geschlossenzellig geschäumten, vernetzten Polyethylens erwiesen. Daneben können jedoch auch andere Werkstoffe zur Anwendung gelangen, insbesondere Schaumstoffe auf Basis von Polypropylen, einer Mischung aus Polyethylen und Polypropylen sowie Polystyrol.

Die Beschichtung kann aus einem beliebigen dehnbaren Werkstoff bestehen, der durch Mikrowellen erwärmbar ist. Bevorzugt kommen im vorliegenden Falle polymere Werkstoffe zur Anwendung, die einen gewissen Gehalt an Kohlenstoff und/oder Chlor aufweisen, insbesondere solche auf polyolefinischer Basis. Diese können gegebenenfalls festhafend an jeweils einem der in radialer Richtung aufeinanderfolgenden Streifen festgelegt sein. Eine Verbindung mit dem jeweils innenliegenden Streifen begünstigt den Wärmeübergang in dieser Richtung und als Folge hiervon eine besonders gute Verpressung zwischen den in radialer Richtung aufeinanderfolgenden Streifen. Kostengünstiger anwenden läßt sich demgegenüber das Verfahren, wenn die Beschichtung auf der Innenseite des jeweils außenliegenden Streifens festgelegt ist. Das Aufbringen kann in diesem Falle zu einem Zeitpunkt erfolgen, in dem der Streifen noch in einer ebenen, unverformten Gestalt vorliegt und damit wesentlich kostengünstiger als im erstgenannten Falle.

Von großem Vorteil in bezug auf die radiale Verpressung der Schichten ist es, wenn die Beschichtung aus einem geschlossenzellig geschäumten Werkstoff besteht, weil sich in diesem Falle eine im wesentlichen irrversible Vergrößerung der Dicke der Beschichtung ergibt.

Zweckmäßigerweise wird die durch die Mikrowellenbehandlung induzierte Wärme so dosiert, daß der Hohlkörper nach einem Durchtrennen seiner Wandung in Längsrichtung seine hohlzylindrische Gestalt im wesentlichen beibehält. Ein separater Tempervorgang zur Erzielung dieses Effektes ist somit bei entsprechender Ausführung des vorgeschlagenen Verfahrens nicht mehr nötig, eine Montage nach einer Längsauftrennung des Hohlkörpers leicht möglich, wobei ein Gleitverschluß im Bereich der Trennfuge das Schließen erleichtern kann.

Ein eventuell zurückbleibender Restspalt kann hierdurch ausgefüllt werden, weshalb sich die Anbringung einer solcherart ausgebildeten Beschichtung insbesondere auf der Innenseite des jeweils außenliegenden Streifens empfiehlt, so lange dieser noch in ebener Gestalt vorliegt. Die Anbringung ist einfach und gewährleistet die Erzielung einer exakt definierbaren Wärmedämmung zu günstigen Kosten. Die Porenstruktur der Beschichtung vergrößert dabei die Wertigkeit an sich.

## Patentansprüche

1. Verfahren zur kontinuierlichen Herstellung eines zylindrischen Hohlkörpers aus einem geschlossenzelligen, thermisch erweichbaren Schaumstoff, bei dem aus dem Schaumstoff ein ebener Streifen gebildet und unter gegenseitiger Verbindung seiner Längskanten und unter Wärmezufuhr zu einem Hohlkörper ·geformt, der Hohlkörper außenseitig mit einer Beschichtung und danach einer Wärmebehandlung unterworfen wird, dadurch gekennzeichnet, daß der Hohlkörper wenigstens einmal mit einer dehnbaren und durch Mikrowellen erwärmbaren Beschichtung versehen sowie unter gegenseitiger Verbindung von dessen Längskanten mit einem weiteren Streifen aus geschlossenzelligem, thermisch erweichbarem Schaumstoff umhüllt wird, worauf die Wärmebehandlung durch Einwirkung von Mikrowellen durchgeführt wird, um eine Erwärmung zu bewirken, durch die die in radialer Richtung aufeinanderfolgenden Streifen wenigstens an einer Grenzfläche miteinander verschmelzen.

2. Verfahren nach Anspruch 1, dadurch gekennzeichnet, daß die Beschichtung um die Außenseite des Hohlkörpers vor dem Umhüllen mit dem weiteren Streifen haftend verbunden werden.

3. Verfahren nach Anspruch 2, dadurch gekennzeichnet, daß die Beschichtung und die Außenseite des Hohlkörpers, falls eine Umhüllung mit nur einem weiteren Streifen vorgesehen ist, vor der Formgebung des Hohlkörpers verbunden werden, indem die Beschichtung auf die Oberfläche des zur Herstellung des Hohlkörpers verwendeten Streifens aufkaschiert wird.

4. Verfahren nach Anspruch 1, dadurch gekennzeichnet, daß die Beschichtung mit der später die Innenseite bildenden Fläche des weiteren, noch ebenen Streifens verbunden wird.

5. Verfahren nach einem der Ansprüche 1 bis 4, dadurch gekennzeichnet, daß als Beschichtung ein thermoplastisch erweichbarer Schaumstoff verwendet wird.

6. Verfahren nach einem der Ansprüche 1 bis 5, dadurch gekennzeichnet, daß die durch Mikrowellen induzierte Erwärmung so dosiert wird, daß der fertige Hohlkörper nach einem Durchtrennen seiner Wandung in Längsrichtung seine hohlzylindrische Gestalt im wesentlichen beibehält.

7. Verfahren nach einem der Ansprüche 1 bis 6, dadurch gekennzeichnet, daß die durch Mikrowellen induzierte Erwärmung so dosiert wird, daß die in radialer Richtung aufeinanderfolgenden Streifen und Beschichtungen zu einem einstückigen Werkstoffkörper verschmelzen.

## Claims

1. Process for the continuous manufacture of a hollow tubular element from a closed-cell, plastifiable foamed plastic, in which a flat strip is formed from the foamed plastic and then is moulded into a hollow element, its longitudinal edges being joined together by the addition of heat, a coating is applied to the exterior of the hollow element, and subsequently said hollow element is subjected to heat treatment, characterised in that the hollow element is coated at least once with an extensible layer which can be heated by microwaves, and is enveloped by another strip of closed-cell, plastifiable foamed plastic, its longitudinal edges being joined together, after which heat treatment is effected by the action of microwaves, so that heating is effected in such a way that the radially successive strips fuse into one another at least at one contact surface.

2. Process according to claim 1, characterized in that the coating is bonded on to the exterior of the hollow element before it is enveloped by the other strip.

3. Process according to claim 2, characterized in that, when the hollow element is enveloped by only one further strip, the coating and the exterior of the hollow element are bonded together before the hollow element is moulded, the coating being bonded on to the surface of the strip to be used for the manufacture of the hollow element.

4. Process according to claim 1, characterised in that the coating is bonded to the surface of the other, still flat, strip which will later form the inner face.

5. Process according to one of claims 1 to 4, characterised in that a plastifiable foamed plastic is used for the coating.

6. Process according to one of claims 1 to 5, characterized in that the microwave-induced heating is regulated in such a way that the finished hollow element essentially retains its hollow tubular shape after its wall is divided in two in the longitudinal direction.

7. Process according to one of claims 1 to 6, characterised in that the microwave-induced heating is regulated in such a way that the radially successive strips and coatings fuse together into one single material element.

## Revendications

1. Procédé pour la fabrication continue d'un corps cylindrique creux en un produit alvéolaire à cellules fermées et qui peut être ramolli thermiquement, dans lequel une bande plane est formée à partir du produit alvéolaire et est façonnée en un corps creux par une liaison mutuelle de ses bords longitudinaux et par une amenée de chaleur, le corps creux étant soumis extérieurement à une enduction et ensuite à un traitement thermique, caractérisé en ce que le corps creux est pourvu au moins une fois d'une enduction élastique et qui peut être réchauffée par des micro-ondes ainsi qu'il est enveloppé, par une liaison mutuelle de ses bords longitudinaux dans une autre bande en un produit alvéolaire à cellules fermées et qui peut être ramolli thermiquement, le traitement thermique étant effectué par une action de micro-ondes afin de produire un échauffement par lequel les bandes successives dans une direction radiale se fondent ensemble l'une avec l'autre au moins à une surface de séparation.

2. Procédé suivant la revendication 1, caractérisé en ce que l'enduction sur la face externe du corps creux est associée de manière adhésive avec l'autre bande, avant l'enveloppement.

3. Procédé suivant la revendication 2, caractérisé en ce que, au cas ou un enveloppement est prévu avec seulement une autre bande, l'enduction et la face externe du corps creux sont associés avant le façonnage du corps creux, pendant que l'enduction est laminée sur la surface de la bande utilisée pour la fabrication du corps creux.

4. Procédé suivant la revendication 1, caractérisé en ce que l'enduction est associée à la surface formant plus tard la face interne de l'autre bande encore plane.

5. Procédé suivant l'une quelconque des revendications 1 à 4, caractérisé en ce qu'un produit alvéolaire qui peut être ramolli thermoplastiquement est utilisé comme enduction.

6. Procédé suivant l'une quelconque des revendications 1 à 5, caractérisé en ce que l'échauffement induit par des micro-ondes est dosé de sorte que le corps creux terminé conserve sensiblement sa forme de cylindre creux après une refente de sa paroi dans la direction longitudinale.

7 Procédé suivant l'une quelconque des revendications 1 à 6, caractérisé en ce que l'échauffement induit par des micro-ondes est dosé de sorte que les bandes et les enductions successives dans une direction radiale se fondent ensemble en un corps de matériau d'une pièce.